Europäisches Patentamt

European Patent Office

Office européen des brevets

(11) Publication number: **0 281 851 B1**

# EUROPEAN PATENT SPECIFICATION

(45) Date of publication of patent specification: **06.05.92**　(51) Int. Cl.⁵: **F02B 19/14**

(21) Application number: **88102742.9**

(22) Date of filing: **24.02.88**

(54) Combustion chamber of a sub-chamber type internal combustion engine.

(30) Priority: **13.03.87 JP 56916/87**

(43) Date of publication of application:
**14.09.88 Bulletin 88/37**

(45) Publication of the grant of the patent:
**06.05.92 Bulletin 92/19**

(84) Designated Contracting States:
**DE FR GB**

(56) References cited:
**GB-A- 2 053 347**
**US-A- 3 196 858**
**US-A- 4 429 669**

(73) Proprietor: **MITSUBISHI JUKOGYO KABUSHIKI KAISHA**
**5-1, Marunouchi 2-chome Chiyoda-ku**
**Tokyo 100(JP)**

Proprietor: **MITSUBISHI JIDOSHA KOGYO KABUSHIKI KAISHA**
**33-8, Shiba 5-chome Minato-ku**
**Tokyo 108(JP)**

(72) Inventor: **Imoto, Koji Nagasaki Techn. Inst. Mitsubishi**
**Jukogyo Kabushiki Kaisha 1-1, Akunoura-machi**
**Nagasaki-shi Nagasaki-ken(JP)**
Inventor: **Tateishi, Mataji Nagasaki Techn. Inst. Mitsubishi**
**Jukogyo Kabushiki Kaisha 1-1, Akunoura-machi**
**Nagasaki-shi Nagasaki-ken(JP)**
Inventor: **Omura, Tadao Nagasaki Techn. Inst. Mitsubishi**
**Jukogyo Kabushiki Kaisha 1-1, Akunoura-machi**
**Nagasaki-shi Nagasaki-ken(JP)**
Inventor: **Nakajima, Kunihiko**
**21-10, Oyashiki Kaide-cho**
**Mukou-shi Kyoto-fu(JP)**
Inventor: **Maekawa, Motoyuki**
**13-68, Morinomiya-cho Kuga Fushimi-ku**
**Kyoto-shi Kyoto-fu(JP)**
Inventor: **Matsuyama, Moritake**
**7-11, Omokage-cho Uzumasa Ukyo-ku**
**Kyoto-shi Kyoto-fu(JP)**
Inventor: **Tamura, Hiroki**
**29-4, Kitayamada-cho Yamada Nishikyo-ku**
**Kyoto-shi Kyoto-fu(JP)**

Rank Xerox (UK) Business Services
(3.08/2.18/2.0)

(74) Representative: **Henkel, Feiler, Hänzel & Partner**
**ner**
**Möhlstrasse 37**
**W-8000 München 80(DE)**

**Description**

BACKGROUND OF THE INVENTION:

Field of the Invention:

The present invention relates to a combustion chamber of a sub-chamber type internal combustion engine.

Description of the Prior Art:

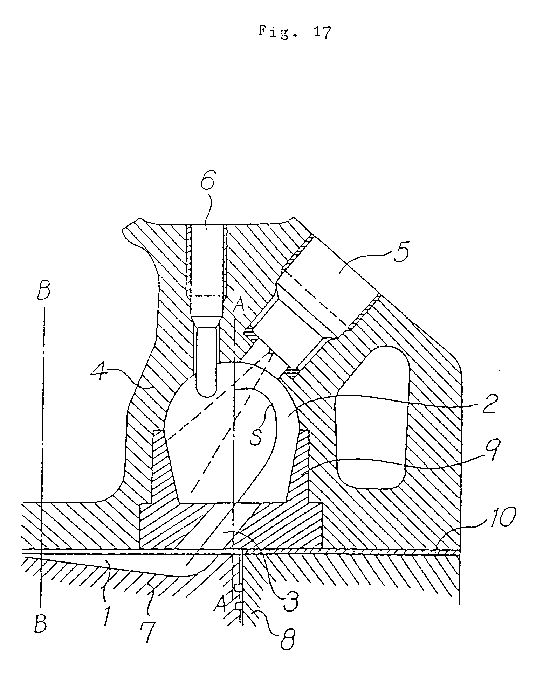

A combustion chamber of a sub-chamber type internal combustion engine in the prior art is illustrated in Fig. 17 {cf. EP-B1-0 150 050, JP-A-57-140516, JP-A-58-18025, and JP-A-60-131627)}. In this figure, a subsidiary combustion chamber 2 is formed in a cylinder head 4. As to the configuration of the subsidiary combustion chamber 2, a hemispherical upper portion combined with a frusto-conical lower portion or a circular-piller-shaped lower portion is known, and in Fig. 17 is shown the configuration including a frusto-conical lower portion. At the subsidiary combustion chamber 2 is disposed a fuel injection valve 5 and, if necessary, a glow plug 6 for preheating the interior of the subsidiary combustion chamber 2 upon starting of the engine. The subsidiary combustion chamber is communicated through a sub-chamber port 3 with a main combustion chamber 1 that is formed of a top surface of a piston 7, a cylinder 8 and a bottom surface of a cylinder head 4. A path cross-section area of the sub-chamber port 3 is constant.

In the combustion chamber of the above-described sub-chamber type internal combustion engine in the prior art, air in the main combustion chamber 1 is compressed by the piston 7 during a compression stroke upon operation of the engine, then it flows into the subsidiary combustion chamber 2 through a sub-chamber port 3, and thereby a swirl flow (S) is produced. If fuel is injected from a fuel injection valve 5 along the direction of the swirl flow (S), the fuel would revolve within the subsidiary combustion chamber 2 jointly with the swirl flow (S), thus mixing of the fuel and air is effected, and the mixture is ignited and burnt. Combustion gas and unburnt fuel within the subsidiary combustion chamber 2 are ejected through the sub-chamber port 3 into the main combustion chamber and work the piston, and at the same time, mixing with air in the main combustion chamber 1 and combustion are effected. In other words, the jet flow emanating from the subsidiary combustion chamber 2 would reach the cylinder wall on the opposite side of the subsidiary combustion chamber 2 with respect to the cylinder center line B-B, would collide against that wall surface, and after the collision it would be dispersed along the wall surface of the cylinder 8.

In the above-described combustion chamber of a sub-chamber type internal combustion engine in the prior art, in order to improve a fuel consumption as well as a starting characteristic upon partial loading of the engine, it is important to increase a path cross-section area of the sub-chamber port 3 to attempt reduction of a thermal loss and a throttling loss at the sub-chamber port. If the path cross-section area of the sub-chamber port 3 is increased for that purpose, then upon heavy loading, a jet flow speed into the subsidiary combustion chamber 2 is reduced, hence a swirl flow speed and further a jet flow speed within the main combustion chamber 1 are reduced, so that mixing and combustion of fuel and air within the main and subsidiary combustion chambers become inactive, and a fuel consumption as well as a smoke density are deteriorated. On the other hand, if the path cross-section area of the sub-chamber port 3 is decreased in order to promote combustion and improve a fuel consumption and a smoke density, then a thermal loss and a throttling loss at the sub-chamber port upon partial loading or upon starting are increased as described previously, and so, a fuel consumption as well as a starting characteristic are deteriorated.

From document US-PS-3,196,858, a combustion chamber of a sub-chamber type internal combustion engine has come to be known, comprising a sub-chamber port communicating a main combustion chamber with a subsidiary combustion chamber formed within a cylinder head, said port being variable by the insertion of a control plunger into the port. The plunger is mechanically driven by means of a cam and a spring to adjust the opening of valve portion at the tip of the plunger, thereby the passage way area of the sub-chamber port is being made variable. In view of its constitution, the combustion chamber as disclosed within the above-mentioned document exhibits the problem of gas leakage from the control mechanism portion. Moreover, since the plunger is driven by the cam and the spring mechanically, it is extremely difficult to reliably adjust the passageway area of the sub-chamber port in accordance with the speed and the load of the engine.

SUMMARY OF THE INVENTION

It is therefore object of the present invention to provide a combustion chamber of a sub-chamber type internal combustion engine according to the pre-characterizing portion of the main claim, in which a fuel consumption and a starting characteristic upon partial loading of the engine are improved and also combustion upon heavy loading of the engine is improved, resulting an in excellent fuel consumption and a favourable smoke density.

This object is solved according to the invention by the features of the characterizing portion of the main claim. Non-trivial improvements on the subject-matter of the main claim are specified within subclaims 2 to 7.

In order to achieve the above-mentioned object, according to the present invention, within a sub-chamber mouthpiece or within a cylinder head and a sub-chamber mouthpiece (throughout this specification and the appended claims, a sub-chamber mouthpiece and a cylinder head are called as a whole "cylinder head member") a space portion is formed which is contiguous to the sub-chamber port and opens at the sub-chamber port, and within the space portion are contained a sub-chamber port control rod and an expansible/contractible tube (hereinafter called simply "expansible tube") connected to the control rod. Furthermore, within the expansible tube a working substance (solid solution, solid, liquid or gas ) is sealingly filled making large expansion and contraction in accordance with temperature variations such as wax, rubber, alcohol, etc. The working substance such as wax sealingly filled in the expansible tube makes expansion or contraction as sensing a temperature of the sub-chamber mouthpiece and the space portion, thus changes the length of the expansible tube, and as a result, the sub-chamber port control rod is actuated to control a path cross-section area of the sub-chamber port.

In the combustion chamber according to the present invention, owing to the above-described novel construction, upon partial loading or upon starting when a temperature of the wall of the combustion chamber (the sub-chamber mouthpiece) is low, a path cross-section area of the sub-chamber port is increased, and so, a jet flow speed as well as a swirl flow speed within the main and subsidiary combustion chambers are suppressed. However, as the loading becomes heavy, the wall temperature of the combustion chamber (the sub-chamber mouthpiece) becomes high, hence due to expansion of the working substance, the sub-chamber port control rod projects into the sub-chamber port, resulting in reduction of the path cross-section area of the sub-chamber port, and thereby the jet flow speed as well as the swirl flow speed within the combustion chamber are increased.

Therefore, according to the present invention, upon partial loading or upon starting when the wall temperature of the combustion chamber is low, since the path cross-section area of the sub-chamber port is increased through the above-mentioned process, a thermal loss as well as a throttling loss at the sub-chamber port can be reduced. When the loading becomes heavy, since the path cross-section area of the sub-chamber port is reduced through the above-mentioned process, gas flow speeds with the main and subsidiary combustion chambers can be increased, formation of a fuel-air mixture and combustion thereof can be promoted.

Accordingly, with the combustion chamber embodying the present invention, a fuel consumption and a smoke density can be reduced over an entire operation range extending from a light loading region to a heavy loading region, and also reduction of $NO_x$ and noise in a partial loading region, improvement of a starting characteristic and speed-up of an engine can be realized.

The above-mentioned features and advantages of the present invention will become more apparent by reference to the following description of preferred embodiments of the invention taken in conjunction with the accompanying drawings.

BRIEF DESCRIPTION OF THE DRAWINGS:

In the accompanying drawings:
Fig. 1 is a longitudinal cross-section view of a first preferred embodiment of the present invention;
Fig. 2 is a partial transverse cross-section view taken along line II-II in Fig. 1 as viewed in the direction of arrows;
Fig. 3 is a longitudinal cross-section view of an essential part of the first preferred embodiment under a starting condition or under a light loading condition;
Fig. 4 is a transverse cross-section view of the same essential part taken along line C-C in Fig. 3 as viewed in the direction of arrows;
Fig. 5 is a diagram showing the effects and advantages of the first preferred embodiment;
Figs. 6 to 9 are longitudinal cross-section views, respectively, showing essential parts of second to fifth preferred embodiments of the present invention;
Fig. 10 is a longitudinal cross-section view of an essential part of a sixth preferred embodiment of the present invention;
Fig. 11 is a transverse cross-section view of the same essential part taken along line $X_1$-$X_1$ in Fig. 10 as viewed in the direction of arrows;
Fig. 12 is a longitudinal cross-section view of an essential part of a seventh preferred embodiment of the present invention under a heavy loading condition;
Fig. 13 is a longitudinal cross-section view of the same essential part but under a starting condition or under a light loading condition;
Fig. 14 is a longitudinal cross-section view of an essential part of an eighth preferred embodiment of the present invention;

Fig. 15 is a longitudinal cross-section view of an essential part of a ninth preferred embodiment of the present invention;

Fig. 16 is a diagram showing the effects and advantages of the ninth preferred embodiment of the present invention; and

Fig. 17 is a longitudinal cross-section view of a combustion chamber of a sub-chamber type internal combustion engine in the prior art.

## DESCRIPTION OF THE PREFERRED EMBODIMENTS:

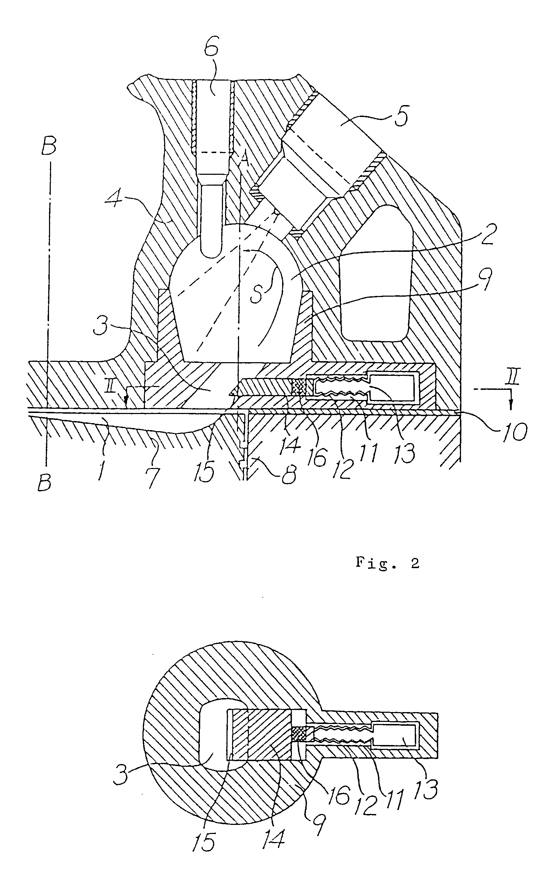

A first preferred embodiment of the present invention is illustrated in Figs. 1 to 4. In the figures, a subsidiary combustion chamber 2 is formed in a cylinder head 4. As to the configuration of the subsidiary combustion chamber 2, a hemispherical upper portion combined with a frusto-conical lower portion or a circular-pillar-shaped lower portion is employed, and in Fig. 1 is shown the configuration including a frusto-conical lower portion. At the subsidiary combustion chamber 2 is disposed a fuel injection valve 5 and, if necessary, a glow plug 6 for preheating the interior of the subsidiary combustion chamber 2 upon starting of the engine. The subsidiary combustion chamber 2 is communicated through a sub-chamber port 3 with a main combustion chamber 1 that is formed of a top surface of a piston 7, a cylinder 8 and a bottom surface of a cylinder head 4.

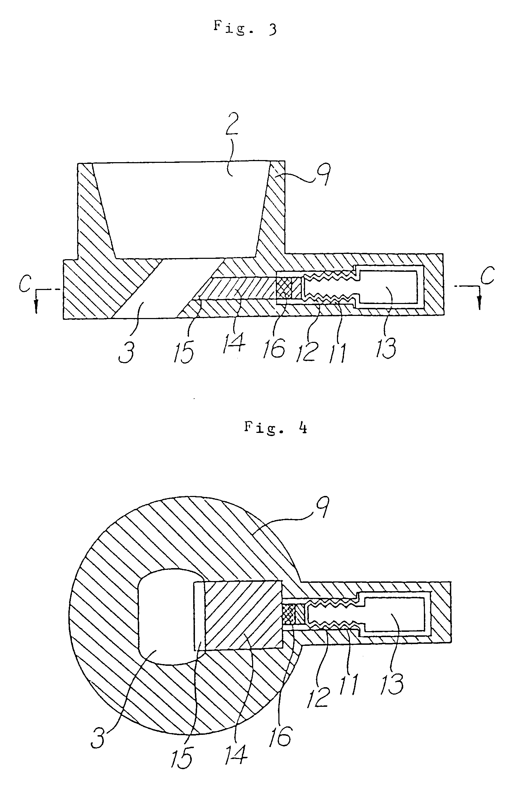

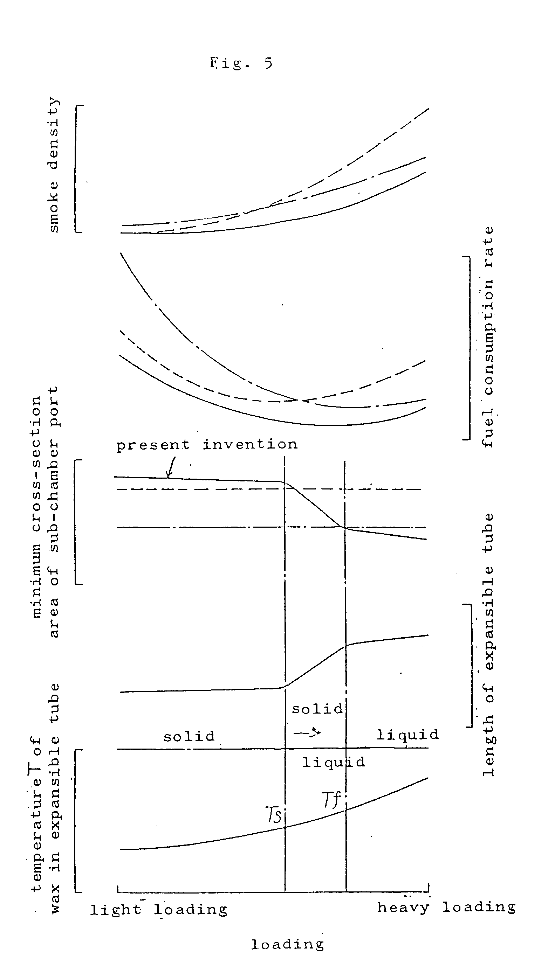

On a cross-section of the sub-chamber port 3 defined as a plane including a center line A-A of the subsidiary combustion chamber and a center line B-B of the cylinder, within a sub-chamber mouthpiece 9 on the side of the wall surface of the sub-chamber port located apart farther from the same cylinder center line B-B is formed a space portion 11 that is contiguous to the sub-chamber port 3 and opens at the sub-chamber port, within this space portion 11 are contained a sub-chamber port control rod 11 and an expansible tube 12 partly consisting of bellows or the like, and the sub-chamber port control rod 14 and the expansible tube 12 are connected with each other. Within the expansible tube 12 is sealingly filled a working substance (solid, liquid, or mixture of solid, liquid and gas) making large expansion and contraction in accordance with temperature variations such as, for example, rubber, alcohol, wax, etc. A tip end portion 15 of the sub-chamber port control rod 14 is either nearly flush with the wall surface of the sub-chamber port or projecting therefrom into the sub-chamber port 3, and this control rod 14 is adapted to slide along the wall surface of the space portion 11. More particularly, the working substance such as wax or the like sealingly filled within the expansible tube 12 would make expansion or contraction as sensing a temperature of the sub-chamber mouthpiece 9 and the space portion 11 via the wall of the expansible tube 12, and would cause the length of the expansible tube 12 to change according to the expansion or contraction. Accordingly, it can control the path cross-section area of the sub-chamber port by actuating the sub-chamber port control rod 14 and its tip end portion 15. In Figs. 3 and 4 is shown the state where the tip end portion 15 of the sub-chamber port control rod 14 is nearly flush with the wall surface of the sub-chamber port upon starting or upon light loading when the temperature of the sub-chamber mouthpiece 9 and the temperature of the space portion 11 are low, whereas in Figs. 1 and 2 is shown the state where the tip end portion 15 of the same control rod is projecting into the sub-chamber port 3 upon heavy loading when the temperature of the sub-chamber mouthpiece 9 and the temperature of the space portion 11 are high. If necessary, heat-insulating material is employed for a part of the sub-chamber port control rod 14.

Since the illustrated embodiment is constructed as described above, upon starting or upon light loading when the wall temperature of the combustion chamber and hence the temperature of the sub-chamber mouthpiece 9 as well as the temperature of the space portion 11 are low, the tip end portion 15 of the sub-chamber port control rod 14 is nearly flush with the inner wall surface of the sub-chamber port (Fig. 3), and so, the path cross-section area of the sub-chamber port is large. Accordingly, during a compression stroke, an inflow speed into the subsidiary combustion chamber 2 of the gas in the main combustion chamber 1 caused by compression of the gas within the main combustion chamber 1 by the piston 7, and hence a swirl flow speed within the subsidiary combustion chamber 2 would become small, so that cooling of fuel and a thermal loss caused by flowing of gases are reduced. In addition, upon light loading, since a fuel injection rate is small, formation of a fuel-air mixture gas and combustion within the subsidiary combustion chamber 2 are insured. Also, during an expansion stroke, outflow of gas from the subsidiary combustion chamber 2 into the main combustion chamber 1 becomes easy because the path cross-section area of the sub-chamber port is large, and hence a throttling loss at the sub-chamber port is reduced. Moreover, as a jet flow speed within the main combustion chamber 1 is small, a thermal loss is also reduced.

As the load of the engine is increased, the wall temperature of the combustion chamber and hence the temperature of the sub-chamber mouthpiece 9 and the temperature of the space portion 11 would become high, the length of the expansible tube 12 would become long because of expansion of the working substance such as wax or the like filled within the expansible tube 12, and so, the tip end portion 15 of the sub-chamber port control rod 14 connected to the expansible tube 12 would project into the sub-chamber port 3 and would decrease the path cross-section area of the sub-chamber port. The heavier the loading becomes, the larger becomes the extent of projection of the tip end portion 15 into the sub-chamber port 3, and the path cross-section area of the sub-chamber port 3 is further decreased. Therefore, the heavier the loading upon the engine becomes, the more increases the jet flow speed from the main combustion chamber 1 to the subsidiary combustion chamber 2 during a compression stroke, and accordingly, the swirl flow speed within the subsidiary combustion chamber 2 becomes large and promotes mixing of fuel and air and their combustion. Furthermore, during an expansion stroke, the jet flow speed into the main combustion chamber 1 is also increased, hence mixing of unburnt fuel and air within the main combustion chamber is promoted, and thereby combustion is improved. On the contrary, if the loading upon the engine is reduced, the wall temperature of the combustion chamber, and hence the temperature of the sub-chamber mouthpiece 9 and the temperature of the space portion 11 are lowered, thus the length of the expansible tube 12 would become short because of contraction of the working substance 13 such as wax or the like within the expansible tube 12, so that the path cross-section area of the sub-chamber port is increased, and thereby a thermal loss as well as a throttling loss at the sub-chamber port would be reduced.

One example of the effects and advantages of the present invention in the case where wax is employed as the working substance within the expansible tube 12, is shown in Fig. 5. Wax presents peculiar characteristics that it is solid and its coefficient of thermal expansion is very small when its temperature T is low ($T<T_s$) ($T_s$ represent the temperature at which it begins to melt), that if the temperature T reaches a certain temperature range ($T_s \leqq T \leqq T_f$) ($T_f$ representing the temperature at which it finishes to melt), phase transformation from solid to liquid occurs and its coefficient of thermal expansion during this period is very large, and that if the temperature T exceeds the temperature $T_f$ - ($T>T_f$) and it becomes perfectly liquid, i coefficient of thermal expansion becomes small. In the case of most of the other substances, while a coefficient of thermal expansion is successively increased as a temperature is raised, it would never occur that a coefficient of thermal expansion changes greatly in accordance with phase transformation as is the case with wax. Accordingly, if wax is employed as a working substance within the expansible tube 12, until the loading becomes heavy to a certain extent (wax temperature $T<T_s$), the length of the expansible tube 12 is elongated only a little and the path cross-section area of the sub-chamber port is kept large, because wax is solid and its coefficient of thermal expansion is very small. If the loading upon the engine becomes heavy and the wax temperature T comes in the range of $T_s \leqq T \leqq T_f$, then was is subjected to phase transformation from solid to liquid, and as its coefficient of thermal expansion becomes very large, the length of the expansible tube 2 is elongated, and the path of the sub-chamber port is throttled. If the loading upon the engine is further increased and the wax temperature T becomes $T>T_f$, then the wax is perfectly transformed into liquid and the coefficient of thermal expansion becomes small, hence the length of the expansible tube 12 is elongated only a little, and variation of the path cross-section area of the sub-chamber port is small with the port kept throttled. On the contrary, if the loading upon the engine is decreased, the wax temperature becomes low, and as the wax contracts, the path cross-section area of the sub-chamber port is increased. In this connection, the force generated upon expansion or contraction of wax is very large, and can be made larger than a gass pressure within the cylinder and a frictional force exerted upon the sub-chamber port control rod 14, and thereby smooth operation of the sub-chamber port control rod 14 is made possible.

Accordingly, in the illustrated embodiment, as shown by a solid line in Fig. 5, the minimum cross-section area of the sub-chamber port can be varied in response to a loading (In the apparatus in the prior art in which a sub-chamber port cross-section area is not varied, the sub-chamber port cross-section area is constant as shown by a dash line or a dash-dot line in Fig. 5.).

In addition, owing to the above-mentioned provision, a fuel consumption rate as well as a smoke density are also improved as compared to the apparatus in the prior art, as shown in Fig. 5.

When alcohol is employed in place of the above-mentioned wax, phase transformation from liquid to gas is effected, and like the above-mentioned example, upon the phase transformation, change of a coefficient thermal expansion takes a very large value.

As will be apparent from the above description, in the illustrated embodiment, upon light loading of the engine, since the sub-chamber port path cross-section area can be enlarged, a thermal loss in the combustion chamber and a throttling loss of the sub-chamber port are reduced, and so, a fuel consumption as well as a smoke density can be decreased. If the loading becomes heavy, the sub-chamber port path cross-section area becomes small, hence mixing of fuel and air as well as combustion in the main and subsidiary combustion chambers are promoted and thereby a fuel consumption and a smoke density can be reduced.

In addition, on the cross-section plane of the sub-chamber port passageway defined as a plane including the center line A-A of the subsidiary combustion chamber and the center line B-B of the cylinder, the temperature of the sub-chamber mouthpiece 9 on the side of the sub-chamber port wall located apart farther from the cylinder center line B-B is considerably low as compared to the temperature of the sub-chamber mouthpiece 9 on the side of the sub-chamber port wall located on the side of the cylinder center line B-B, so that excessive temperature rise of the working substance in the expansible tube 12 can be avoided, and thus durability of the apparatus can be insured. Furthermore, if heat-insulating material 16 is used in the sub-chamber port control rod 14, as a heat flow propagating from the combustion chamber through the sub-chamber port control rod 14 can be suppressed, excessive temperature rise of the working substance in the expansible tube 12 can be avoided.

From the above-mentioned reasons, if the combustion chamber according to the present invention is employed, over the enter loading range extending up to a light loading region, a fuel consumption as well as a smoke density can be reduced, and moreover, reduction of $NO_x$ and noises, improvement of a starting characteristic, and speed-up of an engine in a partial loading region, can be achieved.

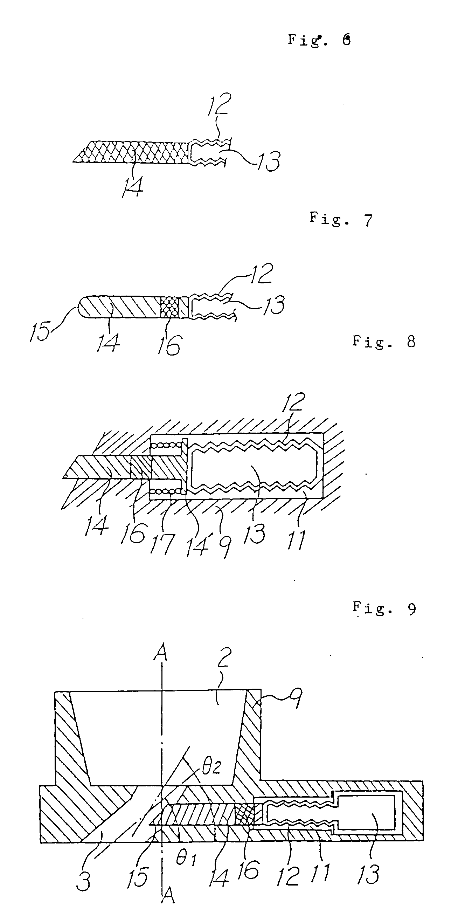

A second preferred embodiment of the present invention is illustrated in Fig. 6. Only difference between this embodiment and the above-described first preferred embodiment exists in the point that whole of the sub-chamber port control rod 14 in the first preferred embodiment is made of heat-insulating material.

While the effects and advantages of this embodiment are almost similar to the above-described first preferred embodiment, as a heat flow propagating from the combustion chamber through the sub-chamber port control rod 14 can be further suppressed, excessive temperature rise of the working substance in the expansible tube 12 can be more perfectly avoided.

A third preferred embodiment of the present invention is illustrated in Fig. 7.

This embodiment is a modification to the first preferred embodiment in that the shape of the tip end portion 15 of the sub-chamber port control rod 14 was changed from an edge shape into a semi-circular shape or a shape having rounded corners as viewed in cross-section, and while the effects and advantages of this modified embodiment are almost similar to the first preferred embodiment, smoothening of the flow through the sub-chamber port 3 as well as improvement in durability of the tip end portion 15 of the control rod 14 can be achieved.

With regard to the above-described second preferred embodiment, too, a modified shape of the tip end portion 15 of the control rod 14 similar to this third preferred embodiment can be employed.

A fourth preferred embodiment of the present invention is illustrated in Fig. 8. In contrast to the fact that in the first preferred embodiment the expansible tube 12 is partly composed of belows, in this embodiment whole of the expansible tube 12 is composed of bellows. In addition, as shown in Fig. 8, for the purpose of positioning of the expansible tube 12 as well as the sub-chamber port control rod 14, a spring 17 or the like is disposed within the space portion 11 between a space portion side wall of the port mouthpiece 9 and a flange 14' provided at one end of the sub-chamber port control rod 14. The effects and advantages of this preferred embodiment is almost similar to those of the first preferred embodiment.

In the second and third preferred embodiments also, a similar structure to this embodiment can be employed.

A fifth preferred embodiment of the present invention is illustrated in Fig. 9.

This embodiment differs from the first preferred embodiment in that in contrast to the fact that in the first preferred embodiment the inclination angle $\theta$ of the axis of the sub-chamber port 3 is constant, in this preferred embodiment, representing an angle of outflow of the axis of the sub-chamber port at an opening end on the side of the subsidiary combustion chamber with respect to a plane perpendicular to the center line A-A of the subsidiary combustion chamber by $\theta_2$ and representing an angle of outflow of the axis of the sub-chamber port at an opening end on the side of the main combustion chamber with respect to the plane perpendicular to the center line A-A of the subsidiary combustion chamber by $\theta_1$, a relation of $\theta_1 < \theta_2$ is realized by forming the above-mentioned axis of the subchamber port by a combination of a straight line or lines and a circular arc or by a combination of straight lines.

While the effects and advantages of this preferred embodiment are almost similar to those of the first preferred embodiment, as an outflow angle $\theta_2$ of the axis of the sub-chamber port at the opening end on the side of the subsidiary combustion chamber is large ($\theta_2 > \theta_1$), during an expansion stroke, outflow of gas from the subsidiary combustion chamber 2 to the main combustion chamber 1 becomes easy (a flow rate factor at the sub-chamber port being large), and hence a throttling loss of the sub-chamber port is further reduced. Moreover, as the above-mentioned outflow angle $\theta_1$ is small ($\theta_1 < \theta_2$), a jet penetration within the main combustion chamber 1 becomes large, mixing between unburnt fuel and air as well as combustion are promoted, and so, a fuel consumption and a smoke density are both improved further.

A similar structure can be employed in the second to fourth preferred embodiments.

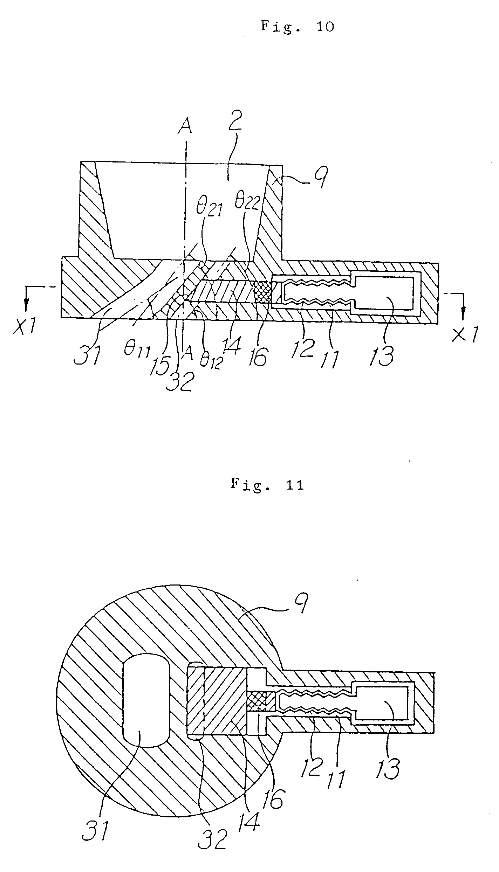

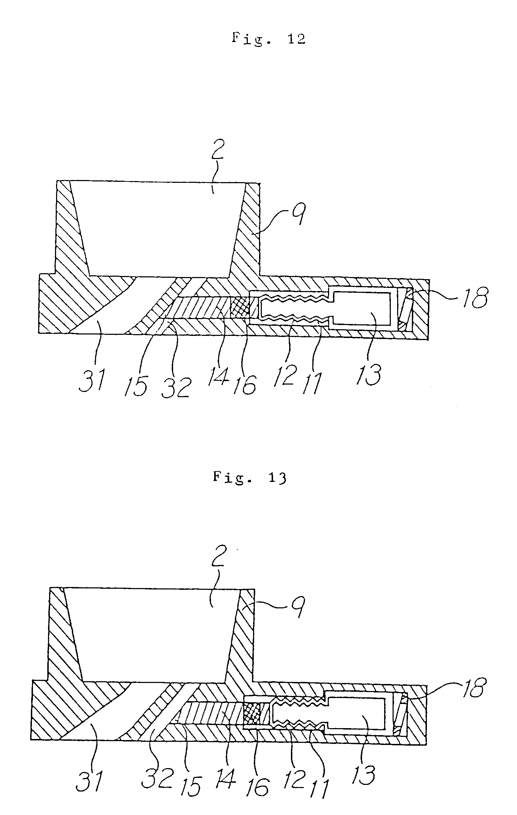

A sixth preferred embodiment of the present invention is illustrated in Figs. 10 and 11.

This embodiment is a modification to the first or fifth preferred embodiment in that the sub-chamber port is provided in multiple. Figs. 10 and 11 show the case where two ports are provided, and a subsidiary port 32 is disposed on the side apart farther from the cylinder center line B-B than a main port 31. On a cross-section plane of the subsidiary port 32 defined as a plane including the center line A-A of the subsidiary combustion chamber and the center line B-B of the cylinder, within a sub-chamber mouthpiece 9 on the side of the subsidiary port located apart farther from the cylinder center line B-B are disposed a space portion 11, a sub-chamber port control rod 14 and an expansible tube 12 having wax or the like sealingly filled therein, and thereby a path cross-section area of the subsidiary port 32 is controlled. When an outflow angle of the axis of the sub-chamber port at the opening end on the side of the subsidiary combustion chamber with respect to a plane perpendicular to the center line A-A of the subsidiary combustion chamber is represented by $\theta_{21}$ for the main port 31 and is represented by $\theta_{22}$ for the subsidiary port 32 and an outflow angle of the axis of the sub-chamber port at the opening end on the side of the main combustion chamber with respect to a plane perpendicular to the center line A-A of the subsidiary combustion chamber is represented by $\theta_{11}$ for the main port 31 and represented by $\theta_{12}$ for the subsidiary port 32, a relation of $\theta_{11} \leqq \theta_{21}$, $\theta_{12} \leqq \theta_{22}$ is realized by forming the above-mentioned axes of the sub-chamber ports by a combination of a straight line or lines and a circular arc or by a combination of straight lines.

While the effects and advantages of this embodiment are almost similar to those of the first or fifth preferred embodiment, in this preferred embodiment since the sub-chamber port control rod 14 comes in and out of the subsidiary port 32 to control only the path cross-section area of the subsidiary port, the control rod 14 does not disturb the flow in the main port 31. Accordingly, mixing between fuel and air and their combustion in the main and subsidiary combustion chambers would be further improved.

In this preferred embodiment, the expansible tubes and the port control rods in the second to fourth preferred embodiments can be employed.

A seventh preferred embodiment of the present invention is illustrated in Figs. 12 and 13.

This embodiment is a modification to the sixth preferred embodiment in that within the space portion 11 in the sub-chamber mouthpiece 9, among the end surfaces of the expansible tube 12 on the end surface opposite to the sub-chamber port control rod 14 is disposed an expansible/contractible member 18 such as a spring washer or a spring, and this member 18 is held in contact with the end surface of the expansible tube 12 and a side wall of the space portion 11. While the effects and advantages of this preferred embodiment are almost similar to those of the sixth preferred embodiment, after the tip end portion 15 of the sub-chamber port control rod 14 has come into contact with a partition wall existing between the subsidiary port 32 and the main port 31 due to temperature rise of the working substance such as wax or the like, if the temperature of the working substance such as wax or the like should rise further and the working substance should expand further, a large force would be exerted between the tip end portion 15 of the sub-chamber port control rod 14 and the above-mentioned partition wall and damage would be brought about. However, according to this modified embodiment, this damage can be prevented by making the expansible/contractible member 18 absorb the displacement of the free end of the expansible tube 12. For instance, in the case where the apparatus is preset in such manner that upon low-speed heavy loading, the tip end portion 15 of the sub-chamber port control rod 14 may come into contact with the above-described partition wall, upon high-speed heavy loading the wall temperature of the combustion chamber and accordingly the temperature of the working substance such as wax or the like would rise further and the above-described unfavorable damage would be resulted unless the member 18 is provided. However, the above-mentioned damage can be prevented by the expansible/contractible member 18 according to this preferred embodiment. Moreover, according to this embodiment, setting of the expansible tube 12 within the sub-chamber mouthpiece 9 becomes easy, and damage of the expansible tube 12 and/or the sub-chamber mouthpiece 9 also can be prevented.

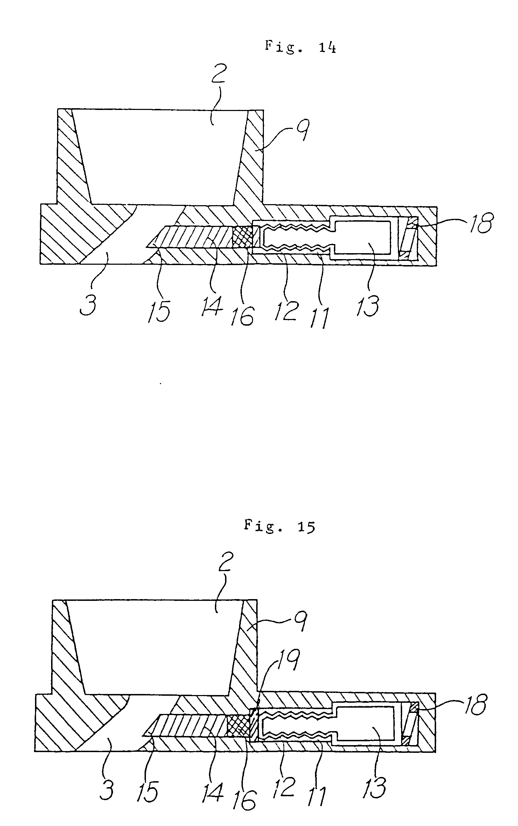

An eighth preferred embodiment of the present invention is illustrated in Fig. 14.

This preferred embodiment is a modification to the first or fifth preferred embodiment (the embodiment having a single sub-chamber port) in that within the space portion in the sub-chamber mouthpiece 9, among the end surfaces of the expansible tube 12, on the end surface opposite to the sub-chamber port control rod 14 is disposed an expansible/contractible member such as a spring washer or a spring, and this member 18 is held in contact with the end surface of the expansible tube 12 and a side wall of the space portion. While the effects and advantages of this embodiment are almost similar to those of the first or fifth preferred embodiments, setting of the expansible tube 12 within the sub-chamber mouthpiece 9 becomes easy, and damage of the expansible tube 12 and/or the sub-chamber mouthpiece 9 can be prevented.

A similar structure can be employed in the second to fourth preferred embodiments.

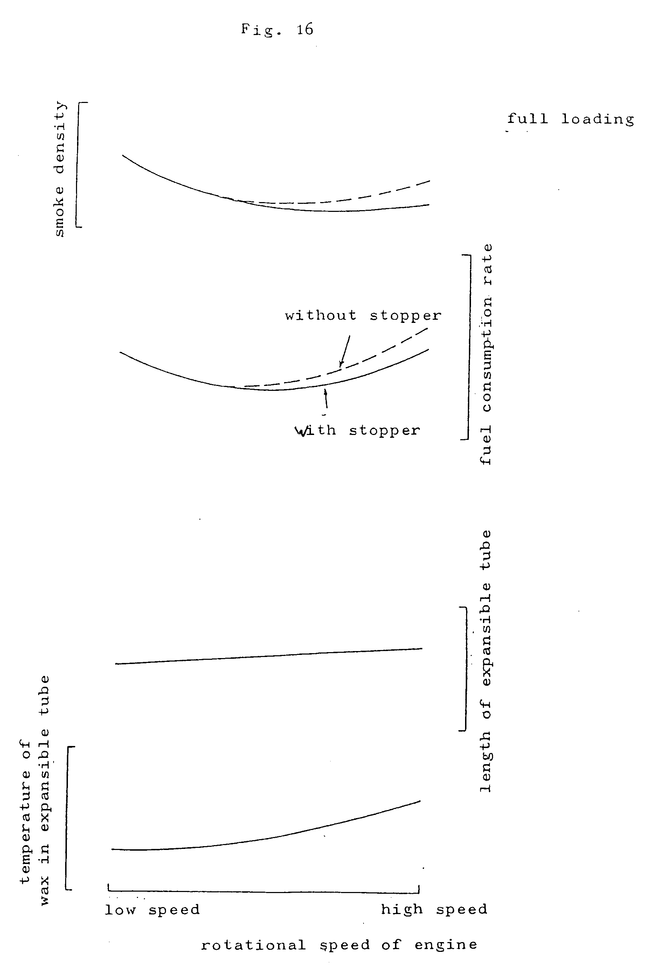

A ninth preferred embodiment of the present invention is illustrated in Figs. 15 and 16.

This embodiment is a modification to the seventh or eighth preferred embodiment in that among the end surfaces of the expansible tube 12 on the end surface on the side of the sub-chamber port control rod 14 or on the end surface of the sub-chamber port control rod 14 on the side of the expansible tube 12, is disposed a stopper 19 for restricting the maximum amount of projection of the sub-chamber port control rod 14 into the sub-chamber port 3.

While the effects and advantages of this embodiment are almost similar to those of the seventh and eighth preferred embodiments, even when the temperature of the working substance such as wax or the like is raised and the length of the expansible tube 12 becomes long, due to existence of the above-described stopper 19 and the expansible/contractible member 18, the path cross-section area of the sub-chamber port is not varied more than a certain extent. One example of this effect and advantage is shown in Fig. 16. Under a full loading condition, if the rotational speed of the engine is raised, the wall temperature of the combustion chamber, hence the temperature of the sub-chamber mouthpiece 9 and the temperature of the space portion 11 would rise, and so, the temperature of the wax within the expansible tube 12 rises and the wax expands. Therefore, the length of the expansible tube 12 becomes long. However, after the stopper 19 has engaged with the side wall of the space portion 11, the sub-chamber port control rod 11 is prevented from moving further in the leftward direction by the stopper 19. In the event that the stopper 19 is not provided, as the rotational speed of the engine rises, the path cross-section area of the sub-chamber port is decreased, and in the high rotational speed region, the sub-chamber port is excessively throttled. Whereas, if the stopper 19 and the expansible/contractible member 18 are disposed according to this preferred embodiment, after the stopper 19 has engaged with the side wall of the space portion, the path cross-section area of the sub-chamber port is not varied further, so that a thermal loss as well as a throttling loss at the sub-chamber port are reduced, and thereby a fuel consumption and a smoke density are improved.

In Fig. 16, the results obtained in the case of this preferred embodiment incorporating the stopper are shwon by solid lines, but the results obtained in the case of employing a port control rod not incorporating the stopper and an expansible tube are shown by dash lines. As will be seen from Fig. 16, according to this preferred embodiment, a fuel consumption and a smoke density are further improved as compared to the case where the stopper is not incorporated.

It is to be noted that while the space portion is provided within the sub-chamber mouthpiece in the above-described respective embodiments, the arrangement is not limited to these embodiments but it is also possible to provide this space portion within the sub-chamber mouthpiece and the cylinder head in combination. In other words, the space portion is provided within the "cylinder head member" as defined previously.

As described in detail above, according to the present invention, upon starting and upon partial loading when the wall temperature of the combustion chamber and hence the temperature of the working substance such as wax or the like are low, since the path cross-section area of the sub-chamber port is large, a thermal loss as well as a throttling loss at the sub-chamber port can be reduced. As the operating condition changes to a heavy loading condition, the wall temperature of the combustion chamber and hence the temperature of the working substance such as wax or the like would rise and the working substance would expand, therefore the length of the expansible tube becomes long, the tip end portion of the sub-chamber port control rod projects into the sub-chamber port, and thereby the path cross-section area of the sub-chamber port can be made small, so that a gas flow velocity within the main and subsidiary combustion chambers can be increased, and formation of a mixture gas of fuel and air and its combustion can be promoted.

Accordingly, with the combustion chamber according to the present invention, over the entire range extending from a light loading region to a heavy loading region, a fuel consumption and a smoke density can be reduced, and also, reduction of generation of $NO_x$ and noises in a partial loading region, improvement of a starting characteristic and speed-up of an engine can be achieved.

## Claims

1. A combustion chamber of a sub-chamber type internal combustion engine, comprising
   a sub-chamber port (3) communicating a main combustion chamber (1) with a subsidiary combustion chamber (2) formed within a cylinder head (4), said port (3) being variable by the insertion of a control rod (14) into the port (3),
   characterized by
   - a space portion (11) formed in a cylinder head member (4, 9) on the side of sub-chamber port wall located apart more far from a cylinder center line on a cross-section plane of said sub-chamber port (3) defined as a plane including a center line of the subsidiary combustion chamber (2) and a center line of a cylinder (8) and opening at said sub-chamber port (3),
   - an expansible/contractible tube (12) contained within said space portion (11), wherein said sub-chamber port control rod (14) is connected to said expansible/contractible tube (12) and slidably inserted into the opening of said space portion (11), and
   - a working substance sealingly filled in said expansible/contractible tube (12) and making large expansion and contraction in accordance with temperature variation.

2. A combustion chamber of a sub-chamber type internal combustion engine as claimed in claim 1, characterized in that a part or whole of said sub-chamber port control rod (14) is made of heat-insulating material.

3. A combustion chamber of a sub-chamber type internal combustion engine as claimed in claim 1 or 2, characterized in that a part or whole of said expansible/contractible tube (12) is formed of bellows.

4. A combustion chamber of a sub-chamber type internal combustion engine as claimed in claim 1, 2 or 3, characterized in that said sub-chamber port (3) includes a sub-chamber main port (31) and a sub-chamber subsidiary port (32), said subsidiary port (32) is disposed more far from the cylinder center line than said main port (31), said space portion (11) opening at said subsidiary port (32) is formed in a cylinder head member (4, 9) on the side of a subsidiary port wall located apart farther from the cylinder center line on a cross-section plane of said subsidiary port (32) defined as a plane including a center line of the subsidiary combustion chamber (2) and a center line of said cylinder (8), and the expansible/contractible tube (12) and said sub-chamber port control rod (14) are disposed in said space portion (11).

5. A combustion chamber of a sub-chamber type internal combustion engine as claimed in claim 1, 2, 3 or 4, characterized in that an expansible member (18) such as a spring washer, a spring or the like is disposed on the end surface of said expansible/contractible tube (12) on the opposite side to said sub-chamber port control rod (14).

6. A combustion chamber of a sub-chamber type internal combustion engine as claimed in claim 1, 2, 3, 4 or 5, characterized in that an axis of the sub-chamber port (3) is formed of a combination of straight lines and a circular arc or straight lines only, and an outflow angle $\theta_2$ at an opening end of the side of the subsidiary combustion chamber (2) of the axis of the sub-chamber port (3) with respect to a plane perpendicular to the center line of the subsidiary combustion chamber (2) or, in the case of two ports, an outflow angle $\theta_{21}$ of the main port (31) and an outflow port $\theta_{22}$ of the subsidiary port (32), and an outflow angle $\theta_1$ at an opening end on the side of the main combustion chamber (1) of the axis of said sub-chamber port (3) with respect to a plane perpendicular to the center line of the subsidiary combustion chamber, respectively, in the case of two ports, an outflow angle $\theta_{11}$ of the main port (31) and an outflow angle $\theta_{12}$ of the subsidiary port (32), are selected so as to fulfil the relation of $\theta_1 \leqq \theta_2$ respectively, in the case of two ports, $\theta_{11} \leqq \theta_{21}$ and $\theta_{12} \leqq \theta_{22}$.

7. A combustion chamber of a sub-chamber type internal combustion engine as claimed in claim 1, 2, 3, 4, 5 or 6, characterized in that among the end surfaces of the expansible/contractible tube (12) at the end surfaces on the side of the sub-chamber port control rod (14), or at the end surface of the sub-chamber port control rod (14) on the side of the expansible/ contractible tube (12), is disposed a stopper (19) for restricting the maximum projecting stroke into the sub-chamber port (3) of the sub-chamber port control rod (14).

**Revendications**

1. Chambre de combustion d'un moteur à combustion interne du type à préchambre, comprenant

   un canal de préchambre (3) faisant communiquer une chambre de combustion principale (1) avec une chambre de précombustion (2) formée dans une culasse (4), le canal (3) étant susceptible d'être varié par l'insertion d'une tige de réglage (14) dans le canal (3), caractérisée par

   - une cavité (11) formée dans un élément de culasse (4, 9) du côté de la paroi du canal de préchambre plus éloigné de l'axe du cylindre, dans un plan de section du canal de préchambre (3) défini par un plan contenant l'axe de la chambre de précombustion (2) et l'axe du cylindre (8), la cavité s'ouvrant dans le canal de préchambre (3),
   - un tube (12) capable d'expansion et de contraction et contenu dans la cavité (11), dans laquelle la tige de réglage (14) est reliée à ce tube (12) et disposée coulissante dans l'ouverture de la cavité (11) et
   - une substance active remplissant le tube (12) capable d'expansion et de contraction, lequel est fermé de façon étanche, la substance active subissant des dilatations et des contractions importantes lors des variations de température.

2. Chambre de combustion d'un moteur à combustion interne du type à préchambre, selon la revendication 1, caractérisée en ce que la tige de réglage (14) du canal de la préchambre est faite partiellement ou entièrement d'un matériau d'isolation thermique.

3. Chambre de combustion d'un moteur à combustion interne du type à préchambre, selon la revendication 1 ou 2, caractérisée en ce que le tube (12) capable d'expansion et de contraction est formé partiellement ou entièrement d'un soufflet.

4. Chambre de combustion d'un moteur à combustion interne du type à préchambre, selon la revendication 1, 2 ou 3, caractérisée en ce que le canal de préchambre (3) comporte un canal principal (31) et un canal auxiliaire (32) qui est disposé à plus grande distance de l'axe du cylindre que le canal principal (31), la cavité (11), s'ouvrant dans le canal auxiliaire (32), est formé dans un élément de culasse (4, 9) du côté de la paroi du banal auxiliaire plus éloigné de l'axe du cylindre, dans un plan de section du canal auxiliaire (32) défini par un plan contenant l'axe de la chambre de précombustion (2) et l'axe du cylindre (8), et le tube (12) capable d'expansion et de contraction et la tige de réglage (14) du canal de la préchambre sont disposés dans la cavité (11).

5. Chambre de combustion d'un moteur à combustion interne du type à préchambre, selon la revendication 1, 2, 3 ou 4, caractérisée en ce qu'un élément expansible (18), tel qu'une rondelle à ressort, un ressort ou analogue, est disposé sur la face d'extrémité du tube (12) située du côté opposé à la tige de réglage (14) du canal de la préchambre.

6. Chambre de combustion d'un moteur à combustion interne du type à préchambre, selon la revendication 1, 2, 3, 4 ou 5, caractérisée en ce que l'axe du canal de préchambre (3) est formé par la combinaison de lignes droites et d'un arc de cercle ou de lignes droites seulement, et un angle d'écoulement de sortie $\theta_2$ formé par l'axe du canal de préchambre (3) à l'orifice du canal situé du côté de la chambre de précombustion (2), par rapport à un plan perpendiculaire à l'axe de la chambre de précombustion (2) ou, au cas où il y a deux canaux, un angle d'écoulement de sortie $\theta_{21}$ du canal principal (31) et un angle d'écoulement de sortie $\theta_{22}$ du canal auxiliaire (32), ainsi qu'un angle d'écoulement de sortie $\theta_1$ formé par l'axe du canal de préchambre (3) à l'orifice de ce canal situé du côté de la chambre de combustion principale (1), par rapport à un plan perpendiculaire à l'axe de la préchambre de combustion ou, au cas où il y a deux canaux, un angle d'écoulement de sortie $\theta_{11}$ du canal principal (31) et un angle d'écoulement de sortie $\theta_{12}$ du canal auxiliaire (32), sont choisis respectivement pour que soit satisfaite la relation $\theta_1 \leq \theta_2$ ou, au cas où il y a deux canaux, pour que soit satisfaite la relation $\theta_{11} \leq \theta_{21}$ et $\theta_{12} \leq \theta_{22}$.

7. Chambre de combustion d'un moteur à combustion interne du type à préchambre, selon la revendication 1, 2, 3, 4, 5 ou 6, caractérisée en ce qu'une butée (19) est prévue sur la face d'extrémité côté tige de réglage (14) du tube (12) capable d'expansion et de contraction ou sur la face d'extrémité côté tube (12) de la tige de réglage (12) du canal de la préchambre, butée qui est destinée à limiter la course maximale d'extension de la tige (14) dans le canal de préchambre (3).

**Patentansprüche**

1. Brennkammer für eine Vorkammer-Brennkraftmaschine, umfassend:

   eine Vorkammeröffnung (3) zur Verbindung einer Hauptbrennkammer (1) mit einer in einem Zylinderkopf (4) ausgebildeten Nebenbrennkammer (2), wobei die Öffnung (3) durch Einführung eines Steuerstabs (14) in die Öffnung (3) variabel ist,

   <u>gekennzeichnet durch</u>
   - einen Raumabschnitt (11), der in einem Zylinderkopfelement (4, 9) an der Seite der Vorkammeröffnungswand, die auf einer Querschnittsebene der Vorkammeröffnung (3), definiert als eine eine Mittellinie der Nebenbrennkammer (2) und eine Mittellinie eines Zylinders (8) einschließende Ebene, weiter von einer Zylindermittellinie entfernt ist und an der Vorkammer-Öffnung (3) mündet,
   - ein im Raumabschnitt (11) enthaltenes verlängerbares/verkürzbares Rohr (12), wobei der Vorkammeröffnung-Steuerstab (14) mit dem verlängerbaren/verkürzbaren Rohr (12) verbunden und verschieblich in die Öffnung (Mündung) des Raumabschnitts (11) eingesetzt ist, und
   - eine unter Abdichtung in das verlängerbare/verkürzbare Rohr (12) eingefüllte Arbeitssubstanz, die in Abhängigkeit von Temperaturänderung eine große Ausdehnung und Zusammenziehung erfährt.

2. Brennkammer für eine Vorkammer-Brennkraftmaschine nach Anspruch 1,

   dadurch gekennzeichnet, daß der Vorkammeröffnung-Steuerstab (14) teilweise oder ganz aus einem wärmeisolierenden Material geformt ist.

3. Brennkammer für eine Vorkammer-Brennkraftmaschine nach Anspruch 1 oder 2, dadurch gekennzeichnet, daß das verlängerbare/verkürzbare Rohr (12) teilweise oder ganz aus einem Faltenbalg geformt ist.

4. Brennkammer für eine Vorkammer-Brennkraftmaschine nach Anspruch 1, 2 oder 3, dadurch gekennzeichnet, daß die Vorkammeröffnung (3) eine Vorkammerhauptöffnung (31) und eine Vorkammernebenöffnung (32) aufweist, die Nebenöffnung (32) weiter von der Zylindermittellinie entfernt ist als die Hauptöffnung (31), der an der Nebenöffnung (32) mündende Raumabschnitt (11) in einem Zylinderkopfelement (4, 9) an der Seite einer Nebenöffnungswand geformt ist, die auf einer Querschnittsebene der Nebenöffnung (32), als eine eine Mittellinie der Nebenbrennkammer (2) und eine Mittellinie des Zylinders (8) einschließende Ebene definiert, weiter von der Zylindermittellinie entfernt ist, und das verlängerbare/verkürzbare Rohr (12) sowie der Vorkammeröffnung-Steuerstab (14) im Raumabschnitt (11) angeordnet sind.

5. Brennkammer für eine Vorkammer-Brennkraftmaschine nach Anspruch 1, 2, 3 oder 4, dadurch gekennzeichnet, daß ein ausdehnbares Element (18), wie eine Federscheibe, eine Feder o.dgl., an der vom Vorkammeröffnung-Steuerstab (14) abgewandten Stirnfläche des verlängerbaren/verkürzbaren Rohrs (12) angeordnet ist.

6. Brennkammer für eine Vorkammer-Brennkraftmaschine nach Anspruch 1, 2, 3, 4 oder 5, dadurch gekennzeichnet, daß eine Achse der Vorkammeröffnung (3) durch eine Kombination von Geraden und einem Kreisbogen oder nur Geraden gebildet ist und ein Ausströmwinkel $\theta_2$ an einem Öffnungsende an der Seite der Nebenbrennkammer (2) zwischen der Achse der Vorkammer-Öffnung (3) und einer senkrecht zur Mittellinie der Nebenbrennkammer (2) liegenden Ebene oder im Fall von zwei Öffnungen ein Ausströmwinkel $\theta_{21}$ der Hauptöffnung (31) und ein Ausströmwinkel $\theta_{22}$ der Nebenöffnung (32) sowie ein Ausströmwinkel $\theta_1$ an einem Öffnungsende an der Seite der Hauptbrennkammer (1) zwischen der Achse der Vorkammeröffnung (3) und einer senkrecht zur Mittellinie der Nebenbrennkammer liegenden Ebene, bzw. im Fall von zwei Öffnungen ein Ausströmwinkel $\theta_{11}$ der Hauptöffnung (31) und ein Ausströmwinkel $\theta_{12}$ der Nebenöffnung (32) so gewählt sind, daß sie der Beziehung $\theta_1 \leqq \theta_2$ bzw., im Fall von zwei Öffnungen, $\theta_{11} \leqq \theta_{21}$ und $\theta_{12} \leqq \theta_{22}$ genügen.

7. Brennkammer für eine Vorkammer-Brennkraftmaschine nach Anspruch 1, 2, 3, 4, 5 oder 6, dadurch gekennzeichnet, daß zwischen den Stirnflächen des verlängerbaren/verkürzbaren Rohrs (12) an den End- oder Stirnflächen an der Seite des Vorkammeröffnung-Steuerstabs (14) oder an der Stirnfläche des Vorkammeröffnung-Steuerstabs (14) an der Seite des verlängerbaren/verkürzbaren Rohrs (12) ein Anschlag (19) zum Begrenzen des maximalen Vorschiebehubs des Vorkammeröffnung-Steuerstabs (14) in die Vorkammeröffnung (3) angeordnet ist.

Fig. 2

Fig. 3

Fig. 4

Fig. 5

Fig. 6

Fig. 7

Fig. 8

Fig. 9

16

Fig. 10

Fig. 11

Fig. 12

Fig. 13

Fig. 14

Fig. 15

Fig. 16

full loading

smoke density

fuel consumption rate

without stopper

with stopper

length of expansible tube

temperature of wax in expansible tube

low speed          high speed

rotational speed of engine

20

Fig. 17